(19) Europäisches Patentamt / European Patent Office / Office européen des brevets

(11) **EP 2 696 543 A1**

(12) **EUROPEAN PATENT APPLICATION**

(43) Date of publication:
**12.02.2014 Bulletin 2014/07**

(51) Int Cl.:
**H04L 12/835** (2013.01)   **H04L 12/815** (2013.01)

(21) Application number: **12179443.2**

(22) Date of filing: **06.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Renesas Electronics Europe Limited Bourne End, Buckinghamshire SL8 5FH (GB)**

(72) Inventors:
• **Kulkarni, Dnyaneshwar**
  **Bourne End, Buckinghamshire SL8 5FH (GB)**

• **Koch, Joerg**
  **40472 Duesseldorf (DE)**
• **Hunjan, Harman**
  **Bourne End, Buckinghamshire SL8 5FH (GB)**
• **Bassett, Matthew**
  **Bourne End, Buckinghamshire SL8 5FH (GB)**

(74) Representative: **Piotrowicz, Pawel Jan Andrzej et al**
**Venner Shipley LLP**
**Byron House**
**Cambridge Business Park**
**Cowley Road**
**Cambridge CB4 0WZ (GB)**

(54) **Calculating credit for controlling data frame transmission**

(57)   A hardware circuit (21) configured to calculate credit for controlling data frame transmission in an AVB network.

Fig. 6

**Description**

The present invention relates to calculating credit for controlling data frame transmission for use in Audio Video Bridging (AVB).

Audio Video Bridging (AVB) allows data to be transmitted through local area networks (LANs) reliably and with guaranteed maximum latency compared with non-AVB Ethernet networks.

AVB employs traffic shaping to evenly distribute transmission of data packets. Without traffic shaping, bursts of data packets could flood the network and overwhelm bridges and switches. Traffic shaping can also help to guarantee latency targets.

AVB uses a credit-based traffic queuing arrangement. As data packets wait in a queue to be transmitted, the queue accumulates credit. When data packets are transmitted from the queue, credit is consumed. If a queue has positive or zero credit, then data can be transmitted. Details of credit-based traffic shaping can be found in IEEE 802.1Qav.

The present invention seeks to provide an improved credit counter for use in credit-based traffic shaping.

According to a first aspect of the present invention there is provided a hardware circuit configured to calculate credit for controlling data frame transmission in an AVB network.

This can help to avoid any software load at an end station and the circuit can be relied upon to provide accurate credit counting.

Some parameters referred to herein are defined as follows:

portTransmitRate is the maximum transmit data rate that a port supporting an outbound queue is able to deliver. The value of this parameter is determined by the operation of a media access control (MAC) controller.

bandwidthFraction is the maximum fraction of portTransmitRate that is available to a queue.

idleSlope is the rate of change of credit for a queue (in bits per second) when the value of credit is increasing, i.e. while the queue is not being transmitted. Under certain conditions, such as continuous stream of frames available, idleSlope is also equivalent to the maximum fraction of the total available bandwidth (portTransmitRate) that is available to the queue, namely:

$$\text{idleSlope} = \text{bandwidthFraction} * \text{portTransmitRate}$$

sendSlope is a rate of change of credit for the queue (in bits per second) when the value of credit is decreasing, i.e. while the queue is being transmitted. The value of sendSlope is defined as follows:

$$\text{sendSlope} = \text{idleSlope} - \text{portTransmitRate}$$

Additionally, the following parameters may be defined for each traffic class (queue):

maxFrameSize is the maximum size (in bits) of a frame that can be transmitted through a port for a traffic class concerned.

maxInterferenceSize is the maximum size (in bits) of any burst of traffic that can delay the transmission of a frame that is available for transmission for this traffic class.

hiCredit is the maximum positive value that can be accumulated in the credit parameter. It is related to maxInterferenceSize and idleSlope by the following equation, namely:

$$\text{hiCredit} = \text{maxInterferenceSize} * (\text{idleSlope} / \text{portTransmitRate})$$

loCredit is the minimum value (negative) that can be accumulated in the credit parameter. It is related to maxFrameSize and sendSlope by the following equation, namely:

$$\text{loCredit} = \text{maxFrameSize} * (\text{sendSlope} / \text{portTransmitRate})$$

The hardware circuit may comprise a module configured to calculate credit value and output a credit status, and hardware registers. The hardware circuit may comprise a first module configured to calculate a credit value and output a credit status for class A traffic and a second module configured to calculate a credit value and output a credit status for class B traffic.

Each module may comprise a credit value register and logic to cause the credit value stored in the credit value register to be updated in dependence upon a queue status and a transmit status, and an enable signal.

The module may further comprise a first comparator configured to determine whether the credit value is positive or zero and to output a credit status.

The module may further comprise at least one comparator configured to compare the credit value against a predefined credit level and to generate at least one interrupt in dependence upon the credit value rising above and/or falling below the predefined credit level.

The module may include a first register (CIV) for storing an increment value and a second register (CDV) for storing a decrement value. The first register may comprise at least 21 bits. For a 32-bit credit counter and maxFrameSize = 16,096 bits, the second register may comprise at least 22 bits.

The increment value may be proportional to a port transmission rate and inversely proportional to a channel host interface (CHI) clock frequency. The increment value may depend on a maximum fraction of bandwidth reserved for a queue. The increment value may depend on a multiplication factor. The multiplication factor is a multiplier chosen to have an integer value for the first register and second register without losing accuracy because of truncation. The multiplication factor may depend on maximum interference size. The multiplication factor may depend on credit counter width. The  multiplication factor has a maximum value so as to avoid credit counter overflow. The increment value may equal (port transmission rate/ clock frequency) x reserved fraction of bandwidth x multiplication factor. The clock frequency may be channel host interface clock frequency or credit counter clock frequency.

The decrement value may be proportional to a port transmission rate and inversely proportional to a clock frequency. The decrement value may depend on a maximum fraction of bandwidth available to a queue. The decrement value may depend on a multiplication factor. The multiplication factor may depend on maximum interference size. The multiplication factor may be at least 10,000. The decrement value may equal (port transmission rate/ clock frequency) x (maximum fraction of bandwidth - 100 %) x multiplication factor.

The module may be configured to receive a clock signal having a clock cycle and to calculate a credit value every clock cycle. The clock signal may have a clock frequency of between 20 MHz and 200 MHz. The clock signal may have a clock frequency of between 50 MHz and 150 MHz. The port transmission rate may be between 100 Mbps and 1 Gbps.

The module may be configured to increase the credit value by the increment value or decrease the credit value by the decrement value every clock cycle.

According to a second aspect of the present invention there is provided a credit-based traffic shaper comprising the hardware circuit and logic for generating a control signal for causing transmission of a given data frame.

According to a third aspect of the present invention there is provided apparatus comprising an audio/video bridging network controller comprising a credit-based traffic shaper, a MAC controller and a transceiver for generating a signal for a medium.

The apparatus may further comprise a host.

According to a fourth aspect of the present invention there is provided an integrated circuit comprising a hardware circuit according or a credit-based traffic shaper. According to a fifth aspect of the present invention there is provided an end station comprising an integrated circuit.

According to a sixth aspect of the present invention there is provided a bridge comprising an integrated circuit. A port of the bridge may comprise the integrated circuit.

According to a seventh aspect of the present invention there is provided a hardware-implemented method of calculating credit for controlling data frame transmission in an AVB network.

The hardware-implemented may comprise receiving a queue status and a transmit status, and an enable signal and updating the credit value stored in a credit value register. The hardware-implemented method may comprise generating a credit status and/or an interrupt.

Certain embodiments of the present invention will now be described, by way of example, with reference to the accompanying drawings in which:

Figure 1 schematically illustrates an example of a switched network;
Figure 2 is a simplified block diagram of an end station;
Figure 3 is a simplified block diagram of a bridge;
Figure 4 illustrates an end station including a credit-based traffic shaper in accordance with the present invention;
Figure 5 is a block diagram of a credit-based traffic shaper including credit counters for class A and B traffic;
Figure 6 is a credit counter and counter update logic module;

Figure 7 illustrates credit update rules used in the credit counter shown in Figure 6; and
Figure 8 illustrates a hardware implementation of a credit counter.

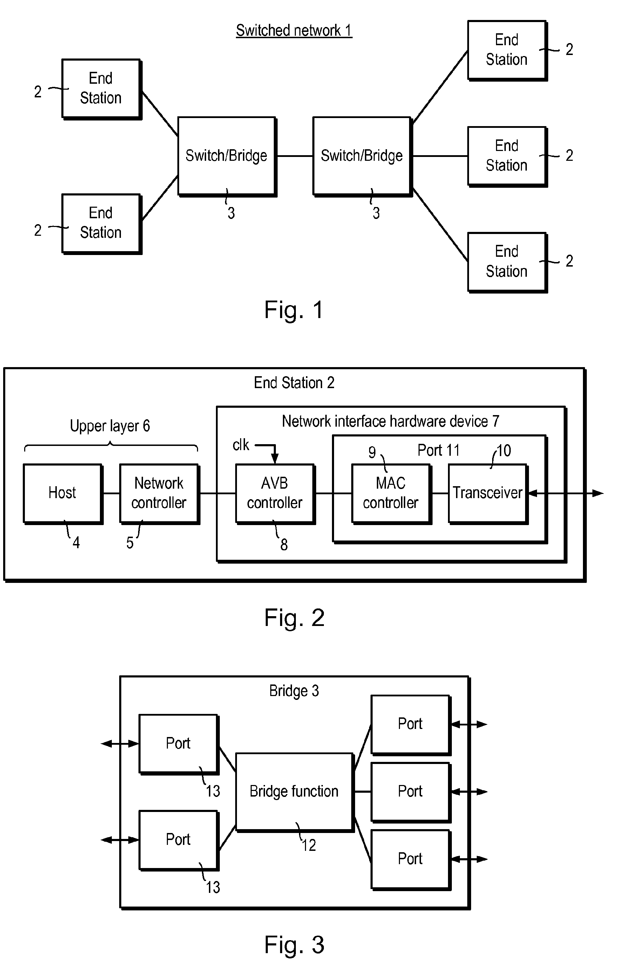

Figure 1 shows a switched network 1 comprising a plurality of end stations 2 and switches 3. The switched network 1 may be deployed, for example, in an automobile (not shown), and be used to stream video and audio data.

An end station 1 can operate as a "talker" and/or a "listener".

Referring also to Figure 2, each end station 2 includes a host 4 which implements processes in layers 4 and above in the OSI layer stack and a network layer controller 5 which implements layer 3 processes. Layers 3 and above are typically referred to as the "upper layer" 6.

Each AVB end station 2 also includes a network interface hardware device 7. The network interface hardware device 7 includes an audio/video bridging (AVB) controller 8, a media access control (MAC) controller 9 and a physical layer controller 10 (or "transceiver" or "PHY"). The AVB controller 8 includes software and hardware which supports IEEE 802.1Qat, IEEE 802.1BA and IEEE 802.1AS and, as will be explained later, can perform traffic shaping in accordance with IEEE 802.1Qav. The MAC controller 9 and physical transceiver 10 form a port 11 which supports IEEE 802.3. The AVB controller 8 receives from the channel host interface (CHI) or generates a clock signal, clk, which can be independent of a clock signal (not shown) used by the port 11. Referring to Figure 3, the AVB bridges 3 support IEEE 1722 and IEEE 1733 protocols. Each bridge 3 comprises a bridge module 12 and two or more ports 13. The bridge module 12 comprises software and hardware which supports IEEE 802.1Q, IEEE 802.1Qav, IEEE 802.1Qat, IEEE 802.1BA and IEEE 802.1AS. The bridge module 12 incorporates the functionality of an AVB module and can perform traffic shaping in accordance with IEEE 802.1Qav. Each port 13 comprises MAC controller (not shown) and transceiver (not shown) which support IEEE 802.3.

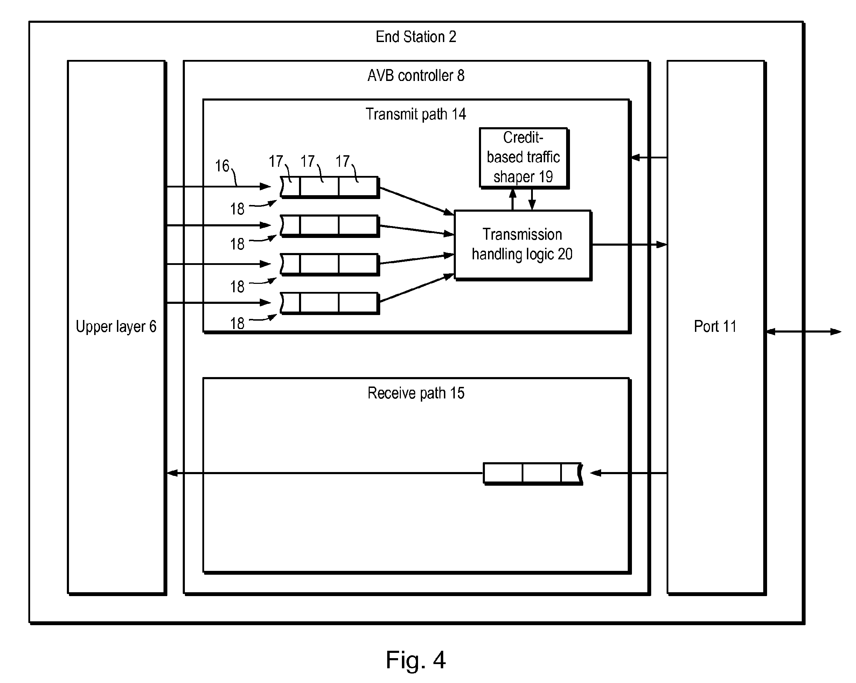

Referring to Figure 4, the AVB controller 8 includes transmit and receive paths 14,15.

The transmit path 14 receives data 16 from the upper layer 6. The data 16 is arranged in transmission frames 17 and placed in queues 18 according to stream. A hardware-implemented credit-based traffic shaper 19 cooperates with transmission handling logic 20 (herein referred to as the "transmission handler") to control transmission of AVB data frames. The transmission handler 20 is used to retrieve data frames 17 (which may include AVB data frames and non-AVB data frames) and pass the frames 17 to the port 11 for transmission through the network 1 (Figure 1).

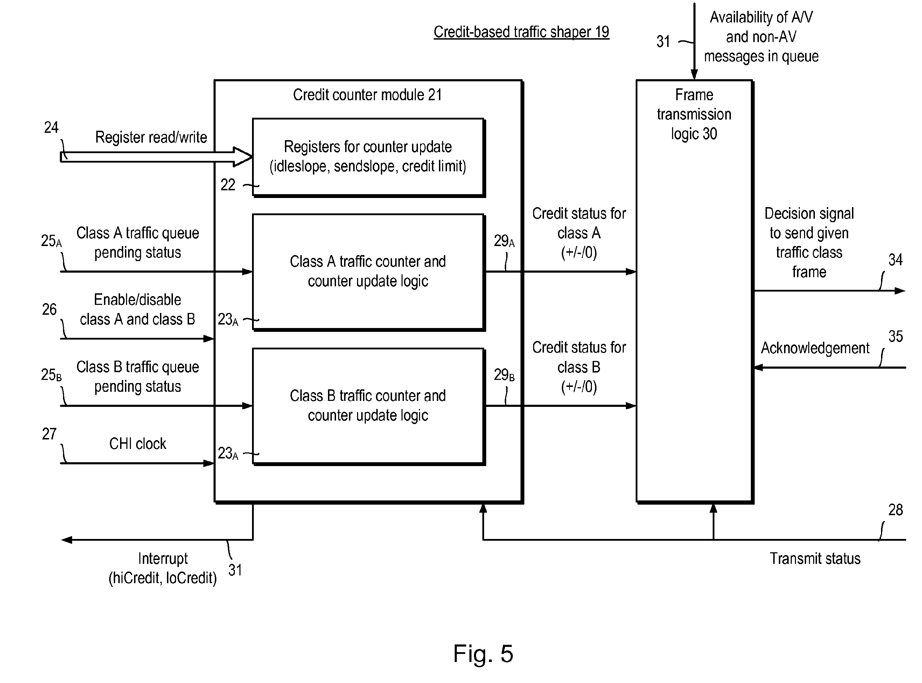

Referring also to Figure 5, the credit-based traffic shaper 19 includes a credit counting module 21 which includes a set of registers 22 for holding values of counter increment, decrement and credit limit, a first credit counter and counter update logic module $23_A$ for class A traffic and a second credit counter and counter update logic module $23_B$ for class B traffic. Class A and class B have different priority levels which specify different values of maximum latency time, 2 ms and 50 ms, respectively.

The credit counting module 21 receives register read/write 24, class A and class B traffic queue pending statuses $25_A$, $25_B$, and an enable/disable signal 26 for classes A and B. The credit counting module 21 receives a channel host interface clock signal 27. A transmit status signal 28 is also fed back to credit counting module 21 from the port 11 (Figure 4).

Each credit counter and counter update logic module $23_A$, $23_B$ outputs a respective credit status $29_A$, $29_B$ for its class. The class A and class B credit statuses $29_A$, $29_B$ are fed into a frame transmission logic circuit 30 for deciding which frame to transmit next. The credit counting module 21 also outputs an interrupt 31.

The frame transmission logic circuit 30 also receives information 32 regarding availability of audio/video and non-audio/video traffic messages in an outgoing queue 33 from the transmission handler 20.

The frame transmission logic circuit 30 outputs an instruction signal 34 to send a frame of a given traffic class to the transmission handler 20. The frame transmission logic circuit 30 receives an acknowledgement signal 35 from the transmission handler 20 and the transmit status 28 from the MAC controller.

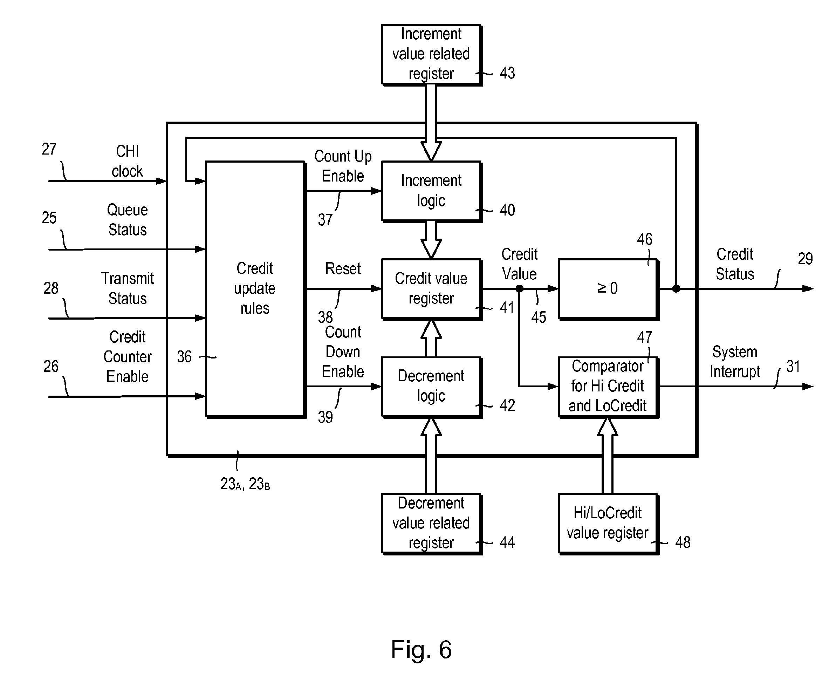

Referring to Figure 6, a credit counter and counter update logic module $23_A$, $23_B$ is shown in more detail.

A queue status 25 for a given class, counter enable 26 and transmit status 28 are provided to a credit update rules module 36.

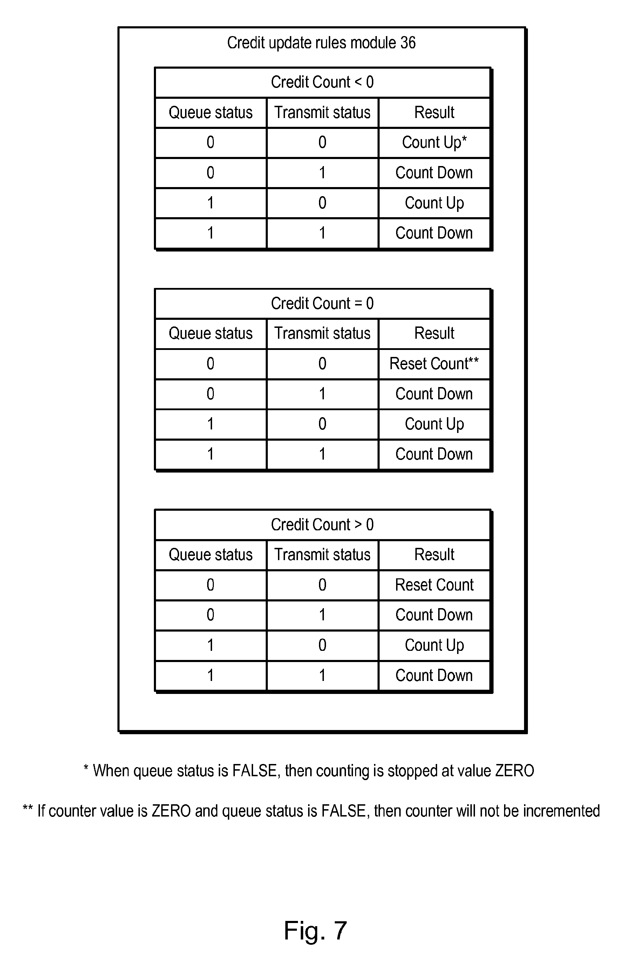

Figure 7 shows the credit update rules encoded in the credit update rules module 36. The credit update rules include rules depending on credit status 29 (Figure 6) depending on whether the credit count is negative, the credit count is zero or the credit count is positive. Logic is provided for each credit status 29 (Figure 5).

Referring again to Figure 6, the credit update rules module 36 can output (one at one time) a count up enable 37, reset 38 or count down enable 39. Count up enable 37, reset 38 or count down enable 39 are supplied to increment logic 40, a credit value register 41 and decrement logic 42 respectively. The increment and decrement logic circuits 40, 42 are provided with values from respective registers 43, 44. As shown in Figure 6, the increment logic 40 and decrement logic 42 is used to increase and decrease the value held in the credit value register 41. Operation of logic blocks and registers are clocked based on the CHI clock signal 27 (Figure 5).

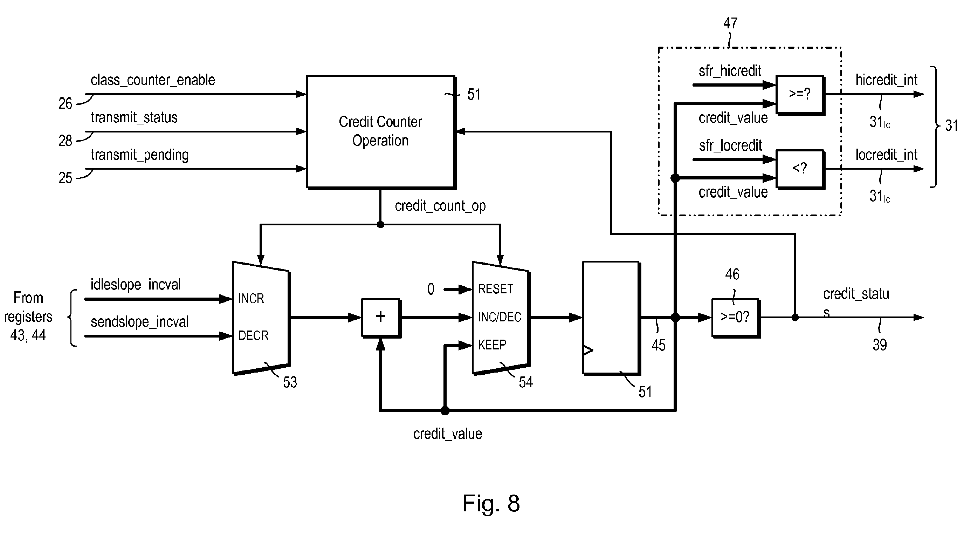

The credit value register 41 outputs a credit value 45. The credit value 45 is supplied to a comparator 46 for determining whether the credit value is positive and outputting a credit status 29. The credit value 45 is supplied to a comparator 47 for determining whether the credit value exceeds a hiCredit value or falls below a loCredit value and generating an interrupt 31. Values of hiCredit and loCredit are held in a register 48. Figure 8 shows an example of an implementation of a credit counter and counter update logic module $23_A$, $23_B$ in more detail.

The implementation is based on a credit-based shaper increment value (CIV) and a credit-based shaper decrement value (CDV).

CIV is a signed, positive value used to effect idleSlope (i.e. the rate of increment of credit for a queue, e.g. in bits per second) by incrementing credit for a queue per channel host interface clock cycle (or "CHI_freq") when the queue is not being transmitted. CDV is a signed, negative value used to effect sendSlope (i.e. the rate of decrement of credit for a queue, e.g. in bits per second) by decrementing credit per channel host interface clock cycle when the queue is being transmitted.

A value portTransmitRate (or "TxRate") is defined as the maximum transmit data rate of the port, for example between about 100 Mps and 1 Gbps. A value bandwidthFraction (or "bwFraction") is defined as the maximum fraction of portTransmitRate that is available to a queue. bwFraction can take a value between about o to 100%, for example 25 %.

CIV and CDV can be calculated as:

$$\mathrm{CIV} = (\mathrm{TxRate} \,/\, \mathrm{CHI\_freq}) \times \mathrm{bwFraction} \times \mathrm{Mfactor} \qquad (1)$$

$$\mathrm{CDV} = (\mathrm{TxRate} \,/\, \mathrm{CHI\_freq}) \times (\mathrm{bwFraction} \text{ - } 1) \times \mathrm{Mfactor} \qquad (2)$$

where Mfactor is a multiplying factor used to have an integer value of CIV and CDV, and the factor 1/CHI_freq is used to express CIV and CDV in bits per CHI clock cycle.

If TxRate is 100 Mbps, CHI_freq is 50 MHz, bwFraction is 3%, and Mfactor is 100, then CIV = (100 Mbps / 50 MHz) × 3% × 100 = 0.06 × 100 = 6 and CDV = (100 Mbps / 50MHz) × (-97%) × 100 = -1.94 × 100 = -194. If TxRate is 1 Gbps, CHI_freq is 133 MHz, bwFraction is 5% (for example for class A), and Mfactor is 10,000, then CIV = 3,759 and CDV = -71,428.

Mfactor is set to be the same for all credit-based shaper parameters within the same class. If this requirement is respected, the use of Mfactor to increment credit at a rate equal to CIV = idleSlope × Mfactor instead of idleSlope and to decrement the credit at a rate equal to CDV = sendSlope × Mfactor instead of sendSlope does not affect the behaviour of the credit-based shaping process because, by definition, bwFraction = idleSlope /(idleSlope - sendSlope) and this does not change if both idleSlope and idleSlope are multiplied by the same factor. Mfactor can be changed during operation, but only when credit counter = o, thereby to keep credit value consistent.

Worst case results for class A and class B hiCredit and loCredit can be used to calculate upper limits for Mfactor for class A and class B traffic.

For example, the maximum frame size can be 2000 bytes and for an interframe gap of 12 bytes, maxFrameSize = 16,096 bits.

To calculate the class A hiCredit worst case, class A bwFraction can be assumed to be about 100%. Thus, a class A queue would have to wait for the transmission of a maximum size frame from a lower priority queue (e.g. class B). Thus, class A hiCredit_max $\cong$ maxInterferenceSize = 16,096 bits. To calculate the class A locredit worst case, class A hiCredit can be assumed to be about o%. Thus, classA loCredit_min $\cong$- maxFrameSize = -16,096 bits.

To calculate the class B hiCredit worst case, class B bwFraction can be assumed to be about 100%. Thus, a class B queue would have to wait for the transmission of a maximum size frame from a lower priority queue (e.g. using best effort) and a max size frame from class A queue (no more than one because class A has low bwFraction). A case where class B bwFraction is lower than 100% and class A bwFraction is higher than o%, allowing classA to transmit more than one frame while class B is waiting, results to bring a class B hiCredit_max that is lower than the one for the case class B bwFraction $\cong$100%, class A bwFraction $\cong$ o%,). Thus, based on the maximum size of frame available in AVB (i.e. 2000 bytes) and 12 byte interframe gap, class B hiCredit_max = maxInterferenceSize = 32,192 bits. To calculate the class B locredit worst case, class B hiCredit can be assumed to be about o%. Thus, class B loCredit_min = - maxFrameSize = -16,096 bits.

If a 32-bit signed counter (thus having a range $-2^{31}$ to $2^{31}-1$) is used, then the maximum value of Mfactor without having overflow for class A is 133,418 (i.e. $2^{31}$-i / hiCredit_max_classA) and for class B is about 66,709 (i.e. $2^{31}-1$ / hiCredit_max_classB).

The maximum value that can be set for CIV without having credit counter overflow is obtained from equation (1) above. When Mfactor and bwFraction take maximum respective values, then:

$$\mathrm{CIV\_max\_classA} = (\mathrm{TxRate} \,/\, \mathrm{CHI\_freq}) \times \mathrm{Mfactor\_max\_classA} \qquad (1A)$$

$$CIV\_max\_classB = (TxRate / CHI\_freq) \times Mfactor\_max\_classB \qquad (1B)$$

Values for CIV_max_dassA and CIV_max_dassB are given in Table 1 below for different values of TxRate and CHI_freq:

Table 1

| TxRate | CHI_freq | CIV_max_classA | CIV_max_classB |
|---|---|---|---|
| 1 Gbps | 125 MHz | 1067337 | 533668 |
| 1 Gbps | 133 MHz | 1003137 | 501568 |
| 1 Gbps | 150 MHz | 889448 | 444724 |
| 100 Mbps | 28 MHz | 476490 | 238245 |
| 100 Mbps | 50 MHz | 266834 | 133417 |
| 100 Mbps | 100 MHz | 133417 | 66708 |

Thus, the number of bits required for CIV registers 43 (Figure 6) depends on combinations of values of TxRate and CHI_freq expected. For example, if TxRate = 1 Gbps and CHI_freq = 125 MHz, then 21 bits are needed in classA CIV register.

The minimum value that can be set for CDV without having credit counter overflow is obtained from equation (2) above. When Mfactor takes a maximum value and bwFraction takes a minimum value ($\cong$ o%), then:

$$CDV\_min\_classA = - (TxRate / CHI\_freq) \times Mfactor\_max\_classA \qquad (2A)$$

$$CDV\_min\_classB = - (TxRate / CHI\_freq) \times Mfactor\_max\_classB \qquad (2B)$$

Values for CDV_max_classA and CDV_max_dassB are given in Table 2 below for different values of TxRate and CHI_freq:

Table 2

| +TxRate | CHI_freq | INC_max_classA | INC_max_classB |
|---|---|---|---|
| 1 Gbps | 125 MHz | -1067337 | 533668 |
| 1 Gbps | 133 MHz | -1003137 | 501568 |
| 1 Gbps | 150 MHz | 889448 | 444724 |
| 100 Mbps | 28 MHz | 476490 | 238245 |
| 100 Mbps | 50 MHz | 266834 | 133417 |
| 100 Mbps | 100 MHz | 133417 | - 66708 |

Thus, the number of bits required for CDV registers 44 (Figure 6) depends on combinations of values of TxRate and CHI_freq expected. For example, if TxRate = 1 Gbps and CHI_freq = 125 MHz, then 21 bits plus sign but are needed in classA CDV register.

Register transfer logic uses a simple, signed counter adding CIV or CDV value every cycle.

In particular, a credit counter operation block 51 outputs a credit_count_op signal 52 to enable operation of first and second multiplexers 53, 54 which control the value of credit held in register 51. The credit value 45 is fed to comparators 46, 47 as well as to the second multiplexer 54.

This implementation can have one or more advantages. Firstly, credit can be counted in bits at each clock cycle and the counter can always be synchronized with transmit status. Secondly, accuracy can be controlled by means of Mfactor. For Mfactor, there is a trade-off between accuracy and the maximum value that can be represented by the counter. However, a value of Mfactor max of about $2^{16}$ (for example, for Class B traffic) still leads to very good accuracy, even for a small bandwidth fraction (e.g. bandwidth error < 0.1% with bwFraction = 0.05%). Finally, the implementation can be effected using simple logic.

More generally, the credit counter and counter update logic module can continuously calculate credit for each stream and, thus, control frame transmission. There is no software load and the credit counter and counter update logic module can be relied upon to provide accurate credit counting. The counting arrangement is not dependent on the number of traffic classes meaning that it can be scaled up to any number of classes. Furthermore, counting can be carried out independent of the clock frequency used by the physical layer (PHY) interface and any peripheral interface (which is product dependent).

It will be appreciated that many modifications may be made to the embodiments herein before described.

For example, the credit counter and counter update logic module may be implemented in other different ways. For example, the implementation may be based on sendSlopeIncVal and sendSlopeNumClocks (taking a value, for example, between 10 and 100), and idleSlopeIncVal and idleSlopeNumClocks (taking a value, for example, between 10 and 100). Register transfer logic may comprise a counter which adds or subtracts SlopeIncVal every SlopeNumClocks cycles.

**Claims**

1.  A hardware circuit (21) configured to calculate credit for controlling data frame transmission in an AVB network.

2.  A hardware circuit according to claim 1, comprising:

    a hardware module ($23_A$) configured to calculate credit value (45) and output a credit status (29); and
    a set of hardware registers (41, 43, 44, 48).

3.  A hardware circuit according to claim 2, comprising:

    a first module ($23_A$) configured to calculate a credit value and output a credit status ($29_A$) for class A traffic; and
    a second module ($23_B$) configured to calculate a credit value and output a credit status ($29_B$) for class B traffic.

4.  A hardware circuit according to claim 2 or 3, wherein the or each module ($23_A$) comprises:

    a credit value register (41); and
    hardware logic (36, 40, 42) to cause the credit value stored in the credit value register (41) to be updated in dependence upon a queue status (25) and a transmit status (28), and an enable signal (26).

5.  A hardware circuit according to any one of claims 2 to 4, wherein the module further comprises:

    a first comparator (46) configured to determine whether the credit value (45) is positive and to output a credit status (29).

6.  A hardware circuit according to any one of claims 2 to 5, wherein the module further comprises:

    at least one comparator (47) configured to compare the credit value (45) against a predefined credit level and to generate at least one interrupt (31) in dependence upon the credit value rising above and/or falling below the predefined credit level.

7.  A credit-based traffic shaper (19) comprising:

    hardware circuit (21) according to any preceding claim; and
    hardware logic (30) for generating a control signal (34) for causing transmission of a given data frame.

8.  Apparatus comprising:

    an audio/video bridging network controller comprising a credit-based traffic shaper (19) according to claim 7;
    a MAC controller; and
    a transceiver for generating a signal for a medium.

**9.** Apparatus according to claim 8, further comprising:

a host.

**10.** An integrated circuit comprising a hardware circuit according to any one of claims 1 to 6 or a credit-based traffic shaper (19) according to claim 7.

**11.** An end station or a bridge comprising an integrated circuit according to claim 10.

**12.** A hardware-implemented method of calculating credit value for controlling data frame transmission in an AVB network.

**13.** A hardware-implemented method according to claim 12 comprising:

receiving a queue status (25) and a transmit status (28), and an enable signal (26); and
updating the credit value stored in a credit value register.

**14.** A hardware-implemented method according to claim 12 or 13, comprising:

generating a credit status (29)

**15.** A hardware-implemented method according to any one of claims 12 to 14, comprising:

generating an interrupt (31).

Switched network 1

Fig. 1

Fig. 2

Fig. 3

Fig. 4

Availability of A/V
and non-AV
messages in queue

31

Credit counter module 21

24          Register read/write

Registers for counter update
(idleslope, sendslope, credit limit)

22

Frame
transmission
logic 30

25A    Class A traffic queue
        pending status

Class A traffic counter and
counter update logic

Credit status for
class A
(+/-/0)

29A

26      Enable/disable
        class A and class B

23A

Decision signal
to send given
traffic class
frame

34

35

25B    Class B traffic queue
        pending status

Class B traffic counter and
counter update logic

Credit status for
class B
(+/-/0)

29B

Acknowledgement

27      CHI clock

23A

28

Interrupt
(hiCredit, loCredit)    31

Transmit status

Fig. 5

EP 2 696 543 A1

Fig. 6

## Credit update rules module 36

| Credit Count < 0 | | |
| --- | --- | --- |
| Queue status | Transmit status | Result |
| 0 | 0 | Count Up* |
| 0 | 1 | Count Down |
| 1 | 0 | Count Up |
| 1 | 1 | Count Down |

| Credit Count = 0 | | |
| --- | --- | --- |
| Queue status | Transmit status | Result |
| 0 | 0 | Reset Count** |
| 0 | 1 | Count Down |
| 1 | 0 | Count Up |
| 1 | 1 | Count Down |

| Credit Count > 0 | | |
| --- | --- | --- |
| Queue status | Transmit status | Result |
| 0 | 0 | Reset Count |
| 0 | 1 | Count Down |
| 1 | 0 | Count Up |
| 1 | 1 | Count Down |

\* When queue status is FALSE, then counting is stopped at value ZERO

\** If counter value is ZERO and queue status is FALSE, then counter will not be incremented

## Fig. 7

Fig. 8

EP 2 696 543 A1

Europäisches
Patentamt
European
Patent Office
Office européen
des brevets

**EUROPEAN SEARCH REPORT**

Application Number

EP 12 17 9443

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "IEEE Standard for Local and Metropolitan Area Networks - Virtual Bridged Local Area Networks Amendment 12: Forwarding and Queuing Enhancements for Time-Sensitive Streams;IEEE Std 802.1Qav-2009 (Amendment to IEEE Std 802.1Q-2005)", IEEE STANDARD, IEEE, PISCATAWAY, NJ, USA, 5 January 2010 (2010-01-05), pages C1-72, XP017604331, ISBN: 978-0-7381-6143-3 * page 15 - page 17 * * page 41 - page 46 * | 1-15 | INV. H04L12/835 H04L12/815 |
| A | US 6 359 861 B1 (SIU KAI-YEUNG S [US] ET AL) 19 March 2002 (2002-03-19) | 1-15 | |
| A | WO 98/25382 A2 (DSC TELECOM LP [US]) 11 June 1998 (1998-06-11) * the whole document * | 1-15 | |
| A | EP 0 471 344 B1 (HITACHI LTD [JP]) 12 February 1997 (1997-02-12) * the whole document * | 1-15 | TECHNICAL FIELDS SEARCHED (IPC) H04L |
| A | US 5 654 962 A (ROSTOKER MICHAEL D [US] ET AL) 5 August 1997 (1997-08-05) * the whole document * | 1-15 | |
| A | US 2005/281282 A1 (GONZALEZ HENRY J [US] ET AL) 22 December 2005 (2005-12-22) * paragraph [0064] - paragraph [0066] * * claims 15-19 * | 1-15 | |

The present search report has been drawn up for all claims

| Place of search | Date of completion of the search | Examiner |
|---|---|---|
| The Hague | 29 May 2013 | Perrier, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 17 9443

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2013

| Patent document cited in search report | | Publication date | Patent family member(s) | | Publication date |
|---|---|---|---|---|---|
| US 6359861 | B1 | 19-03-2002 | NONE | | |
| WO 9825382 | A2 | 11-06-1998 | AU | 7627798 A | 29-06-1998 |
| | | | CA | 2273997 A1 | 11-06-1998 |
| | | | EP | 0944976 A2 | 29-09-1999 |
| | | | US | 5953318 A | 14-09-1999 |
| | | | US | 5999518 A | 07-12-1999 |
| | | | WO | 9825382 A2 | 11-06-1998 |
| EP 0471344 | B1 | 12-02-1997 | AU | 637250 B2 | 20-05-1993 |
| | | | AU | 8247591 A | 20-02-1992 |
| | | | CA | 2049182 A1 | 18-02-1992 |
| | | | DE | 69124645 D1 | 27-03-1997 |
| | | | DE | 69124645 T2 | 04-09-1997 |
| | | | EP | 0471344 A1 | 19-02-1992 |
| | | | JP | 2880271 B2 | 05-04-1999 |
| | | | JP | H0498938 A | 31-03-1992 |
| | | | US | 5280475 A | 18-01-1994 |
| US 5654962 | A | 05-08-1997 | AU | 7981494 A | 08-05-1995 |
| | | | EP | 0724794 A1 | 07-08-1996 |
| | | | JP | H09504149 A | 22-04-1997 |
| | | | US | 5446726 A | 29-08-1995 |
| | | | US | 5654962 A | 05-08-1997 |
| | | | US | 5856975 A | 05-01-1999 |
| | | | US | 5963543 A | 05-10-1999 |
| | | | WO | 9511554 A1 | 27-04-1995 |
| US 2005281282 | A1 | 22-12-2005 | NONE | | |

EPO FORM P0459

For more details about this annex : see Official Journal of the European Patent Office, No. 12/82